# DEMANDE DE BREVET EUROPEEN

(11) **EP 2 316 257 A1**
(43) Date de publication de la demande: **04.05.2011**
(21) Numéro de dépôt: 10188505.1
(22) Date de dépôt: 22.10.2010
(51) Int. Cl.: A01C 7/10

(54) **Dispositif de détection de bouchage d'au moins un rang d'ensemencement d'une tête de répartition d'un semoir pneumatique comprenant une pluralité de rangs d'ensemencement**

(30) Priorité: 30.10.2009 FR 0957711
(71) Demandeur: Sulky Burel, 35220 Chateaubourg (FR)
(72) Inventeur: Clochard, Daniel, 35113, DOMAGNE (FR); Imbert, Franck, 35380, PAIMPONT (FR); Leveille, Lionel, 35500, VITRE (FR)
(74) Mandataire: Le Noane, Karine

(57) **Abrégé**

L'invention concerne un dispositif de détection de bouchage d'au moins un rang d'ensemencement d'une tête de répartition d'un semoir pneumatique, comprenant une pluralité de rangs d'ensemencement, chaque rang comprenant un canal principal (11) de circulation de particules. Selon l'invention, un tel dispositif comprend, dans chaque rang d'ensemencement, au moins un volet (12) mobile en rotation autour d'un axe (121) sensiblement perpendiculaire au flux d'air (14) pouvant circuler dans ledit rang, de façon à pouvoir prendre au moins deux positions :
- une position de présence d'un flux d'air, dans laquelle ledit volet est placé à proximité d'un bord intérieur dudit canal principal ;
- une position d'absence ou de quasi absence de flux d'air, dans laquelle ledit volet s'étend dans ledit canal principal, sous l'effet de la gravité,

et des moyens de génération d'une alarme de bouchage (13), tenant compte de la position d'absence ou de quasi absence de flux d'air dans au moins un desdits rangs.

## Description

### 1. Domaine de l'invention

Le domaine de l'invention est celui de la distribution de produit en grains, par exemple les semoirs destinés à l'épandage et/ou l'enfouissement contrôlé de graines ou semis de plantes à cultiver sur une parcelle, par exemple d'une exploitation agricole.

Plus précisément, l'invention concerne les semoirs destinés à être montés ou traînés à l'arrière d'un tracteur, permettant de délivrer simultanément des graines et/ou de l'engrais, appelés plus généralement particules, sur une pluralité de rangs. Un tel semoir comprend généralement une tête de répartition et de distribution de particules, alimentant une pluralité d'éléments de distribution, appelés rangs d'ensemencement. Un tel semoir est notamment décrit dans le document de brevet EP1901601 du présent demandeur.

Plus précisément encore, l'invention concerne la détection d'un bouchage d'au moins un rang d'ensemencement.

Notamment, l'invention s'applique aux semoirs permettant de commander sélectivement l'activation (c'est-à-dire l'ensemencement) de certains rangs et l'absence d'activation d'autres rangs (par exemple un sur deux) du semoir.

### 2. Art antérieur

Différents types de semoirs, principalement pneumatiques, sont connus de l'art antérieur et tentent d'apporter une solution au problème du bouchage sur un rang d'ensemencement.

Un tel bouchage peut être dû à de la terre, un corps étranger ou encore un bouchon de particules à distribuer, et est assez fréquent.

Cela pose des problèmes car un tel bouchage de rang d'ensemencement, s'il n'est pas détecté, entraîne non seulement des rangs non semés, mais également d'autres conséquences, différentes selon le type de semoir.

Par exemple, pour un semoir équipé d'un monodoseur et d'une tête de répartition de particules, les particules ne pouvant pas être transportées vers le rang bouché se répartissent vers les autres rangs, créant ainsi un surdosage de ces rangs.

De tels semoirs pneumatiques selon l'art antérieur comportent généralement, pour chaque rang d'ensemencement, un détecteur de passage de particules équipé d'une cellule photoélectrique, permettant de détecter si des particules coupent le faisceau lumineux. Par exemple, un tel système est décrit dans les documents de brevet US 4166948, GB 1506651 ou EP 0988779.

Un inconvénient de ces détecteurs de passage de particules connus de l'art antérieur vient du fait qu'un tel dispositif est très coûteux, et suppose l'ajout et la mise en oeuvre de plusieurs pièces.

En effet, en plus de la cellule photoélectrique, il est nécessaire de doter chaque diviseur de particules d'un circuit électronique permettant notamment de reconnaître aussi bien le passage de faibles quantités de graines que le passage de grosses quantité de graines, et permettant également de reconnaître aussi bien le passage de petites graines (par exemple du colza) que le passage de grosses graines (par exemple le pois).

De plus, de tels systèmes nécessitent un afficheur spécifique, pour indiquer quel rang est bouché, ce qui augmente leur coût.

Un autre inconvénient réside dans l'encombrement de tels système, dû notamment aux nombreux câbles nécessaires.

Enfin, ces systèmes sont relativement fragiles et présentent des performances de détection qui se dégradent au fil du temps, les cellules photoélectriques étant salies par les produits de traitement enrobant les graines.

### 3. Objectifs de l'invention

L'invention a notamment pour objectif de pallier ces inconvénients de l'art antérieur.

Plus précisément, un objectif de l'invention est de fournir une technique de détection du bouchage d'un rang d'ensemencement qui permette d'informer l'utilisateur d'un tel bouchage, simplement et efficacement.

Un autre objectif de l'invention, selon au moins un des modes de réalisation de l'invention, est de fournir une telle technique de détection du bouchage d'un rang d'ensemencement présentant un encombrement réduit, comparativement aux dispositifs connus de l'art antérieur.

Un autre objectif de l'invention, selon au moins un des modes de réalisation de l'invention, est de fournir une telle technique de détection du bouchage d'un rang d'ensemencement permettant une adaptabilité sur différents types de semoirs du marché, ainsi qu'une adaptabilité pour différents types de particules.

Un autre objectif de l'invention, selon au moins un des modes de réalisation de l'invention, consiste à fournir une telle technique de détection du bouchage d'un rang d'ensemencement qui soit simple et peu coûteuse à fabriquer.

### 4. Caractéristiques essentielles de l'invention

L'invention propose une solution nouvelle qui ne présente pas l'ensemble de ces inconvénients de l'art antérieur, sous la forme d'un dispositif de détection de bouchage d'au moins un rang d'ensemencement d'une tête de répartition d'un semoir pneumatique, comprenant une pluralité de rangs d'ensemencement, chaque rang comprenant un canal principal de circulation de particules.

Selon l'invention, un tel dispositif comprend, dans chaque rang d'ensemencement, au moins un volet mobile en rotation autour d'un axe sensiblement perpendiculaire au flux d'air pouvant circuler dans ledit rang, de façon à pouvoir prendre au moins deux positions :
- une position de présence d'un flux d'air, dans laquelle ledit volet est placé à proximité d'un bord intérieur dudit canal principal ;
- une position d'absence ou de quasi absence de flux d'air, dans laquelle ledit volet s'étend dans ledit canal, sous l'effet de la gravité.

De plus, selon l'invention, un tel dispositif comprend également des moyens de génération d'une alarme de bouchage, tenant compte de la position d'absence ou de quasi absence de flux d'air dans au moins un desdits rangs.

Ainsi, l'invention repose sur une approche nouvelle et inventive de la détection du bouchage d'un rang d'ensemencement, basée sur la détection, par un volet mobile, de l'absence ou quasi absence d'un flux d'air.

Ainsi, une alarme n'est générée que lorsqu'une absence ou quasi absence d'un flux est détectée, et non en présence d'un flux d'air, chargé de graines ou autres particules à distribuer.

L'invention permet ainsi de générer une alarme dès que, pour au moins un rang d'ensemencement, le volet mobile se trouve dans une position indiquant une absence ou quasi absence de flux d'air.

De plus, l'invention permet de détecter le bouchage d'au moins un rang, que celui-ci soit bouché en aval ou en amont du volet mobile.

Par ailleurs, en contrôlant la présence d'un flux d'air, l'invention permet de détecter sans délai le bouchage d'au moins un rang, même si ce bouchage se produit en aval du volet mobile, contrairement à l'art antérieur basé sur la détection du passage des graines et dans lequel un bouchage en aval n'est pas détecté immédiatement, et entraîne une accumulation de graines jusqu'à ce que celle-ci atteigne le capteur de détection.

Selon un aspect particulier de l'invention, chacun desdits rangs comprend un clapet pouvant prendre deux positions :
- une position d'ensemencement, dans laquelle ledit clapet libère ledit canal principal et obture un canal de retour ;
- une position fermée, dans laquelle ledit clapet obture ledit canal principal et libère ledit canal de retour,
et lesdits moyens de génération d'une alarme tiennent compte de la position dudit clapet.

Ainsi, dans un semoir à tête de répartition comprenant un système de déviation du flux de particules dans chaque rang d'ensemencement, sous la forme d'un clapet, l'invention permet, selon un mode de réalisation, de tenir compte également de la position du clapet pour générer ou non une alarme, et non plus seulement de la détection de l'absence ou quasi absence d'un flux d'air.

Il est à noter que le clapet permet, dans une position fermée, d'obturer complètement le canal principal, ou de l'obturer partiellement de façon à dévier suffisamment le flux d'air et donc le flux de particules vers un canal de retour.

Selon un mode de réalisation avantageux de l'invention, lesdits moyens de génération d'une alarme génèrent une alarme lorsque ledit clapet est dans la position d'ensemencement et que ledit volet est dans la position d'absence ou quasi absence de flux d'air.

En effet, il convient de s'assurer qu'aucune alarme ne sera générée dans le cas où le rang d'ensemencement est volontairement obturé de façon à diriger les particules vers un canal de retour en cuve, par exemple dans le cas d'un ensemencement en mode « tramline » ou un rang sur deux.

Selon un mode de réalisation particulier de l'invention, le déplacement de chaque clapet est contrôlé par un levier de clapet, et lesdits moyens de génération d'une alarme sont contrôlés par la position dudit levier de clapet.

Ainsi, lorsque le clapet est contrôlé par un levier, pour choisir l'une ou l'autre des positions d'ensemencement ou fermée, il est avantageux de prévoir de contrôler les moyens de générations d'alarme également en fonction de la position du levier de clapet, de façon à s'assurer de manière simple qu'aucune alarme ne sera générée lorsque la position du levier de clapet correspond à la position fermée.

Selon un mode de réalisation particulier de l'invention, ledit levier de clapet porte au moins un capteur de détection de la position dudit volet.

Ainsi, la détection de la position du volet dépend de la position du levier du clapet, permettant ainsi de tenir compte du mode de fonctionnement choisi, à savoir ensemencement ou fermeture du rang.

Selon un mode de réalisation particulier de l'invention, ledit volet porte un aimant, et ledit capteur de détection est un capteur magnétique apte à détecter la proximité dudit aimant.

Ainsi, les moyens de génération d'une alarme dépendent de la proximité entre un aimant sur le volet et un capteur magnétique sur le levier du clapet.

En particulier, lorsque ledit capteur magnétique détecte la proximité dudit aimant, un circuit de génération d'alarme est fermé.

Dans ce mode de réalisation, la proximité entre un aimant sur le volet et un capteur magnétique sur le levier du clapet entraîne la fermeture d'un circuit d'alarme et la génération d'une alarme de détection d'un bouchage dans le rang.

Par exemple, le circuit d'alarme peut comprendre une ampoule de type « ILS » (interrupteur à lame souple), comprenant au moins un contact fermant le circuit d'alarme lorsqu'il est activé, par exemple par la proximité d'un aimant.

Selon un autre mode de réalisation avantageux de l'invention, dans ladite position d'absence de flux d'air, une portion de contact dudit volet, conductrice, vient en contact avec une surface conductrice pour fermer un circuit de génération d'alarme.

Ainsi, ce mode de réalisation permet de s'affranchir d'un capteur sur le levier de clapet.

La surface conductrice se trouve par exemple sur un bord extérieur du rang, ou du canal principal, comme le circuit de génération d'alarme.

Selon un aspect particulier de ce mode de réalisation, ladite surface conductrice est commune à l'ensemble desdits rangs.

Ainsi, la détection d'un seul rang bouché permet la génération d'une alarme, quelque soit la localisation du rang bouché.

De plus, ce mode de réalisation nécessite un seul circuit de génération d'alarme commun pour tous les rangs.

Enfin, selon un aspect particulier de l'invention, la fermeture dudit circuit entraîne l'allumage d'un indicateur lumineux sur ledit rang et/ou la génération d'un signal d'alarme déporté dans un poste de pilotage.

Ainsi, une alarme de bouchage peut être générée localement, c'est-à-dire au niveau du rang d'ensemencement bouché, ou bien de manière déportée au niveau du poste de pilotage du semoir, ou bien les deux.

De cette manière, l'utilisateur peut être averti d'un bouchage dans un rang au niveau du poste de pilotage et peut ainsi y remédier rapidement.

Par ailleurs, le repérage du rang bouché est facilité localement par une alarme visuelle au niveau du rang en question.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1a et 1b illustrent le principe de l'invention ;
- les figures 2a à 2c présentent des exemples selon un premier mode de réalisation de l'invention ;
- les figures 3a et 3b illustrent des exemples selon une première variante d'un second mode de réalisation de l'invention ;
- les figures 4a et 4b illustrent des exemples selon une deuxième variante d'un second mode de réalisation de l'invention.

### 6. Description détaillée d'un mode de réalisation de l'invention

### 6.1 Principe général

L'invention repose sur la détection d'une absence ou quasi absence d'un flux d'air, pour détecter un bouchage dans un rang d'ensemencement d'un semoir.

En effet, l'invention propose de générer une alarme de bouchage d'un rang en cas de détection d'absence ou de quasi absence de flux d'air.

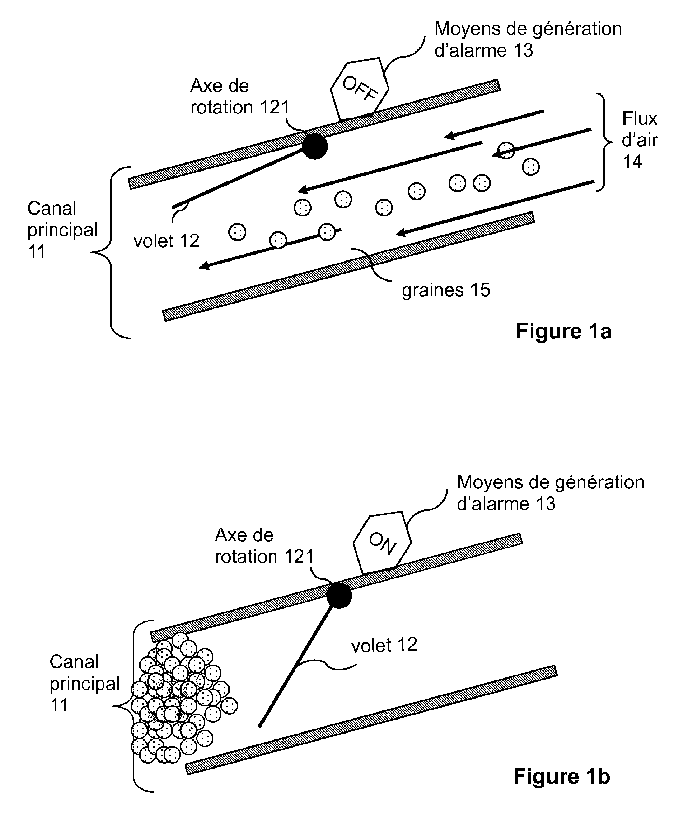

Les figures 1a et 1b illustrent ce principe général de l'invention, respectivement en cas de passage d'un flux chargé de graines ou autres particules à distribuer dans un rang d'ensemencement et en cas de bouchage du rang.

On considère un semoir pneumatique, comprenant une tête de répartition des particules, comprenant une pluralité de rangs d'ensemencement.

Une telle tête de distribution peut être circulaire, linéaire, ou de toute autre forme appropriée.

Chaque rang comprend un canal principal 11 de circulation de particules.

Selon l'invention, on détecte l'absence ou quasi absence d'un flux d'air, grâce à un volet 12, associé à des moyens de génération d'alarme 13.

En effet, en fonctionnement sans bouchage, un flux d'air 14 entraîne la circulation des particules 15.

Il est à noter que l'invention permet la détection d'un bouchage d'un rang, en amont, ou en aval du volet de détection de bouchage.

Par la suite, pour plus de lisibilité des figures, on ne représentera plus le flux de particules 15, mais seulement le flux d'air 14 correspondant.

En particulier, le volet 12 est mobile en rotation autour d'un axe 121 sensiblement perpendiculaire au flux d'air 14, de façon à pouvoir prendre au moins deux positions :
- une position de présence d'un flux d'air 14, dans laquelle le volet 12 est placé à proximité d'un bord intérieur du canal principal 11 ;
- une position d'absence de flux d'air, dans laquelle le volet s'étend dans le canal principal 11, sous l'effet de la gravité.

La position de présence d'un flux d'air est illustrée en figure 1a, où l'on peut observer que le volet 12 est maintenu proche du bord supérieur du canal principal 11, sous l'effet du flux d'air 14.

La position d'absence de flux d'air est illustrée en figure 1b, où l'on peut observer que le volet 12 s'étend dans le canal principal 11, sous l'effet de la gravité et de l'absence de flux d'air.

Les figures 1a et 1b montrent également des moyens 13 de génération d'une alarme de bouchage.

Ces moyens 13 de génération d'une alarme tiennent compte de la position du volet, et en l'occurrence sont en position « OFF », c'est-à-dire de non génération d'alarme, lorsque le volet 12 est dans la position de présence d'un flux d'air, et en position « ON », c'est-à-dire de génération d'alarme, lorsque le volet 12 est dans la position d'absence de flux d'air.

De plus, il est également prévu d'informer le poste de pilotage du semoir d'une telle alarme « locale », en générant un signal d'alarme déporté, dès qu'une alarme locale est générée sur un des rangs d'ensemencement de la tête de distribution du semoir.

Pour ce faire, les moyens de génération d'alarme des différents rangs d'ensemencement sont reliés entre eux, par exemple en série (une alarme sur l'un quelconque des rangs introduisant un contact sur le circuit électrique, et se traduisant par exemple par l'allumage d'un voyant sur le poste de pilotage).

Ainsi, l'utilisateur est informé, dans son poste de pilotage, d'un bouchage dans un rang, qu'il pourra ensuite localiser, en laissant fonctionner la soufflerie de transport de particules, grâce à l'indicateur visuel d'alarme local sur le rang bouché.

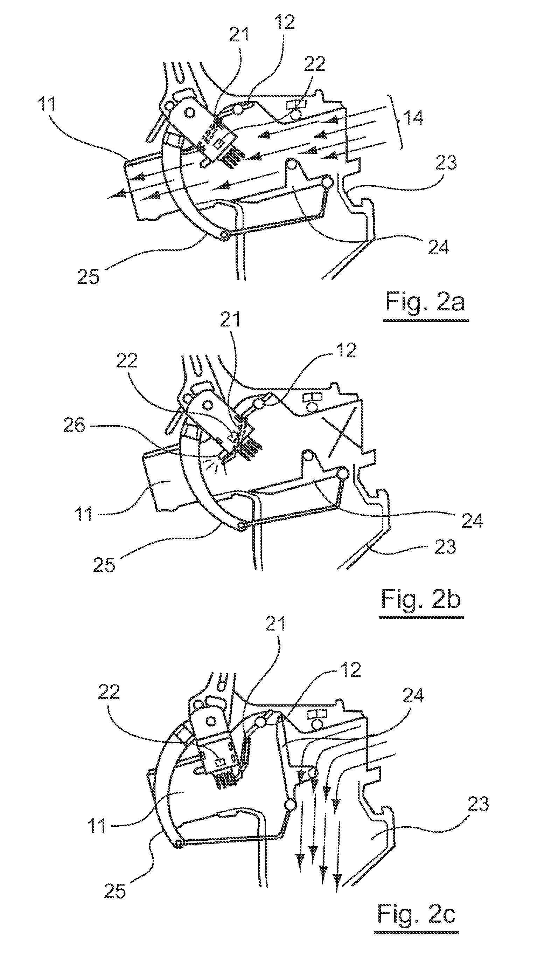

On présente maintenant plus en détail deux modes de réalisation de l'invention, en relation avec les figures 2a à 2c, pour le premier mode de réalisation, et 3a, 3b, 4a à 4b pour le deuxième mode de réalisation.

### 6.2 Premier mode de réalisation

Selon ce premier mode de réalisation particulier de l'invention, un rang d'ensemencement comprend un clapet 24 pouvant prendre deux positions, illustrées en figure 2a (2b) et 2c :
- une position d'ensemencement (figure 2a et 2b), dans laquelle le clapet 24 libère le canal principal 11 et obture le canal de retour 23 ;
- une position fermée (figure 2c), dans laquelle le clapet 24 libère le canal de retour 23 et obture, totalement ou partiellement, le canal principal 11.

Le clapet 24 est contrôlé par un levier de clapet 25, portant, selon ce mode de réalisation, un capteur magnétique 22 de position du volet 12. De plus, le volet 12 porte un aimant 21, dont la proximité est détectée par le capteur 22.

Ainsi, lorsque l'aimant est proche du capteur, une alarme est générée. Le capteur 22 étant porté par le levier de clapet 25, la génération d'une alarme dépend non seulement de la position du volet 12, mais également de la position du clapet 24.

Ainsi, comme illustré en figure 2a, lorsque le clapet 24 est en position d'ensemencement, et qu'un flux d'air 14, accompagnant un flux de particules, circule dans le canal principal 11, l'aimant 21 et le capteur 22 sont suffisamment éloignés pour le capteur 22 ne détecte pas la présence de l'aimant 21. En effet, le volet 12 se trouve dans une position de présence de flux d'air, c'est-à-dire quasiment plaqué contre le bord intérieur supérieur du canal principal 11. Aucune alarme de bouchage n'est alors générée.

En revanche, lorsque le rang d'ensemencement est bouché, comme illustré en figure 2b, et qu'aucun flux d'air ne circule dans le canal principal 11, alors l'aimant 21 se trouve à proximité du capteur 22, car le volet 12 s'étend dans le canal principal 11, sous l'effet de la gravité. Une alarme de bouchage, locale, est alors générée, par exemple par allumage d'un indicateur lumineux de type diode.

Comme indiqué dans le principe général de l'invention, il est également prévu d'informer le poste de pilotage du semoir d'une telle alarme, en générant un signal d'alarme déporté, dès qu'une alarme locale est générée sur un des rangs d'ensemencement de la tête de distribution du semoir. Par exemple, tous les capteurs 22 sont reliés entre eux, de manière à générer un signal d'alarme déporté dès que l'un d'entre eux détecte la proximité d'un aimant 21.

On considère maintenant le cas, illustré en figure 2c, où le canal principal 11 est volontairement fermé, pour faire passer le flux de particules dans le canal de retour, par exemple pour mettre en oeuvre un ensemencement en mode « tramline » ou un rang sur deux, etc.

Pour ce faire, le levier de clapet 25 maintient le clapet 24 en position de fermeture du canal principal 11.

Le volet 12 n'est pas maintenu proche de la paroi supérieure du canal 11, à cause de l'absence ou de la quasi absence de flux d'air, et s'étend donc dans le canal 11, sous l'effet de la gravité.

Cependant, le levier de clapet 25, et par conséquent le capteur magnétique 22, se trouvent éloignés du volet 12, et par conséquent de l'aimant 21, en raison de la position « fermée » du clapet 24. Comme souhaité, aucune alarme de bouchage n'est générée.

L'invention permet donc, selon ce mode de réalisation, de tenir compte de la position du clapet 24, en complément de la position du volet 12 de détection de l'absence ou quasi absence d'un flux d'air, pour générer ou non une alarme de bouchage.

De cette manière, aucune alarme non souhaitée n'est générée, par exemple dans le mode de fonctionnement « tramline » du semoir.

De plus, ce mode de réalisation présente une grande fiabilité de détection, grâce à la combinaison entre l'aimant 21 et le capteur magnétique 22.

Selon une mise en oeuvre particulière, le capteur magnétique 22 comprend une ampoule de type « ILS », comprenant au moins un contact permettant d'allumer une diode lorsqu'il est activé, par exemple par la proximité de l'aimant 21 porté par le volet 12.

Il est également prévu, dans un mode de réalisation particulier, de temporiser le déclenchement de l'alarme. Ainsi, afin d'éviter le déclenchement d'alarmes intempestives, dues par exemple à une fuite d'air au niveau du clapet 24 qui ferait « sautiller » le volet 12 et donc se rapprocher épisodiquement l'aimant 21 et le capteur magnétique 22, on prévoit de ne déclencher l'alarme que si le capteur magnétique détecte la proximité de l'aimant de façon continue pendant une période prédéterminée.

### 6.3 Deuxième mode de réalisation

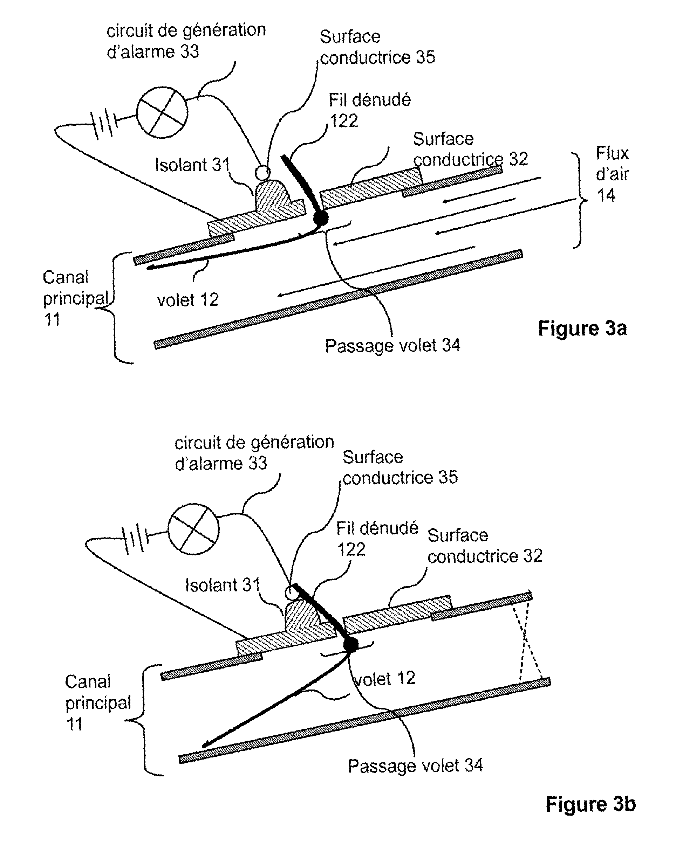

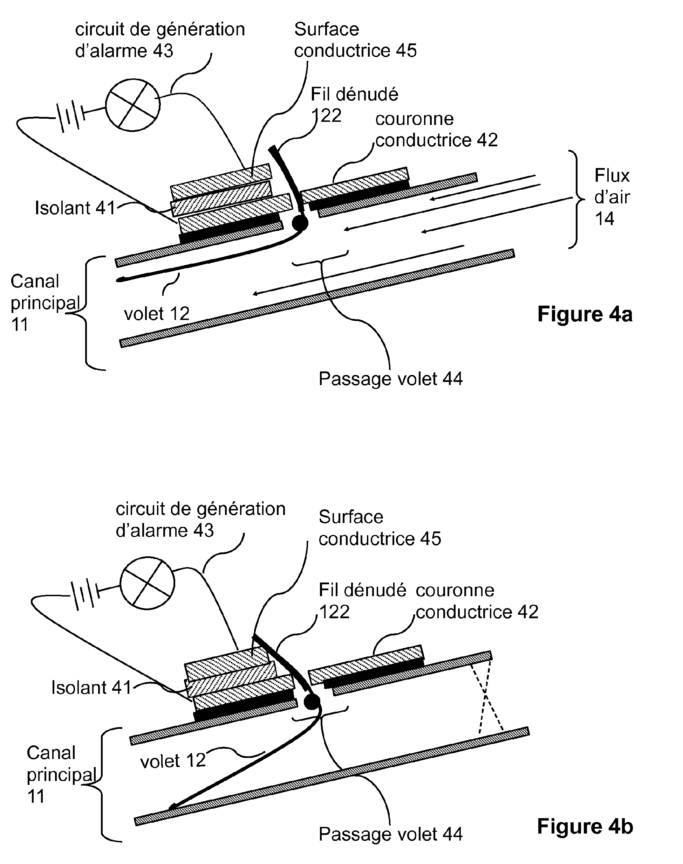

On présente maintenant, en relation avec les figures 3a, 3b et 4a et 4b, un deuxième mode de réalisation particulier de l'invention.

Ce mode de réalisation de l'invention est basé sur une détection de contact entre le volet 12 et les surfaces conductrices 32, 35 (42, 45), fermant un circuit 33 (43) de génération d'alarme.

Selon une première variante de ce mode de réalisation, illustrée en figures 3a et 3b, la surface conductrice 32 se trouve de part et d'autre d'un passage de volet 34, par lequel une extrémité du volet 12 ressort du canal principal 11.

Le circuit de génération d'alarme 32, combiné avec cette surface conductrice 32 et une surface conductrice 35, constituée par exemple un toron conducteur, faisant le tour de la tête de répartition, et un isolant 31, permet de générer une alarme de bouchage lorsque le volet, ou plus exactement sa partie supérieure constituée d'un fil dénudé 122, entre en contact avec la surface conductrice 35.

La figure 3a illustre le cas où un flux d'air 14, engendré par un flux de particules, circule dans le canal principal 11, et maintient par conséquent le volet 12 sensiblement contre la paroi supérieure intérieure du canal 11. Dans cette position, le volet 12, et plus particulièrement sa partie dénudée 122, n'est pas en contact avec la surface conductrice 35. Le circuit de génération d'alarme 33 reste alors ouvert et aucune alarme de bouchage n'est générée.

Sur la figure 3b, on se trouve dans le cas où le rang d'ensemencement est bouché, et où aucun flux d'air ne circule dans le canal principal. Le volet 12 s'étend alors dans le canal principal 11, dans une position de détection d'absence de flux d'air, sous l'effet de la gravité. Dans cette position, on constate que la partie dénudée 122 du volet 12 se trouve en contact avec la surface conductrice 35, fermant ainsi le circuit de génération d'alarme 33. Une alarme de bouchage locale est alors générée.

Comme déjà décrit précédemment, cette alarme locale peut consister en l'allumage d'un signal lumineux, par exemple une diode, et peut également être associée à une alarme déportée dans le poste de pilotage, pour informer l'utilisateur.

Cette alarme déportée peut être générée grâce à une liaison entre tous les circuits de génération d'alarme 33, formant en fait un seul et même circuit d'alarme, déclenchant une alarme dès qu'au moins un bouchage est détecté dans un rang d'ensemencement de la tête de distribution du semoir.

Selon une deuxième variante de ce mode de réalisation, illustrée en figures 4a et 4b, la surface conductrice 45 correspond à une couronne conductrice plate.

Ces couronnes conductrices 42 et 45 sont portées par la tête de distribution.

Le principe de cette deuxième variante est le même que celui de la première variante et est basé sur un contact entre la partie supérieure dénudée 122 du volet 12 et les couronnes conductrices 42 et 45 lorsque le rang d'ensemencement est bouché, générant ainsi une alarme de bouchage.

Comme pour la première variante, un seul circuit de génération peut être mis en oeuvre, reliant chaque partie des couronnes conductrices et générant une alarme dès qu'un volet 12 d'un rang d'ensemencement entre en contact avec ces couronnes conductrices.

Par exemple, les couronnes conductrices 42 et 45, ainsi que le circuit de génération d'alarme sont reliés à une lampe témoin, qui s'allume dès que le circuit est fermé suite à la détection d'un bouchage dans un rang d'ensemencement.

## Revendications

1. Dispositif de détection de bouchage d'au moins un rang d'ensemencement d'une tête de répartition d'un semoir pneumatique, comprenant une pluralité de rangs d'ensemencement, chaque rang comprenant un canal principal (11) de circulation de particules,
**caractérisé en ce qu'**il comprend, dans chaque rang d'ensemencement, au moins un volet (12) mobile en rotation autour d'un axe (121) sensiblement perpendiculaire au flux d'air (14) pouvant circuler dans ledit rang, de façon à pouvoir prendre au moins deux positions :
- une position de présence d'un flux d'air, dans laquelle ledit volet est placé à proximité d'un bord intérieur dudit canal principal ;
- une position d'absence ou de quasi absence de flux d'air, dans laquelle ledit volet s'étend dans ledit canal principal, sous l'effet de la gravité,
et **en ce qu'**il comprend des moyens de génération d'une alarme de bouchage (13), tenant compte de la position d'absence ou de quasi absence de flux d'air dans au moins un desdits rangs.

2. Dispositif de détection de bouchage selon la revendication 1, **caractérisé en ce que** chacun desdits rangs comprend un clapet (24) pouvant prendre deux positions :
- une position d'ensemencement, dans laquelle ledit clapet libère ledit canal principal et obture un canal de retour (23) ;
- une position fermée, dans laquelle ledit clapet obture ledit canal principal, et libère ledit canal de retour,
et **en ce que** lesdits moyens de génération d'une alarme tiennent compte de la position dudit clapet.

3. Dispositif de détection de bouchage selon la revendication 2, **caractérisé en ce que** lesdits moyens de génération d'une alarme génèrent une alarme lorsque ledit clapet est dans la position d'ensemencement et que ledit volet est dans la position d'absence ou de quasi absence de flux d'air.

4. Dispositif de détection de bouchage selon l'une quelconque des revendications 2 et 3, **caractérisé en ce que** le déplacement de chaque clapet est contrôlé par un levier (25) de clapet, et **en ce que** lesdits moyens de génération d'une alarme sont contrôlés par la position dudit levier de clapet.

5. Dispositif de détection de bouchage selon la revendication 4, **caractérisé en ce que** ledit levier de clapet porte au moins un capteur (22) de détection de la position dudit volet.

6. Dispositif de détection de bouchage selon la revendication 5, **caractérisé en ce que** ledit volet porte un aimant (21), et **en ce que** ledit capteur de détection est un capteur magnétique apte à détecter la proximité dudit aimant.

7. Dispositif de détection de bouchage selon la revendication 6, **caractérisé en ce que**, lorsque ledit capteur magnétique détecte la proximité dudit aimant, un circuit de génération d'alarme est fermé.

8. Dispositif de détection selon l'une quelconque des revendications 1 à 7, **caractérisé en ce que**, dans ladite position d'absence ou de quasi absence de flux d'air, une portion de contact dudit volet, conductrice, vient en contact avec une surface conductrice pour fermer un circuit de génération d'alarme.

9. Dispositif de détection selon la revendication 8, **caractérisé en ce que** ladite surface conductrice est commune à l'ensemble desdits rangs.

10. Dispositif de détection de bouchage selon l'une quelconque des revendications 7 à 9, **caractérisé en ce que** la fermeture dudit circuit de génération d'alarme entraîne l'allumage d'un indicateur lumineux sur ledit rang et/ou la génération d'un signal d'alarme déporté dans un poste de pilotage.
